# EUROPÄISCHE PATENTSCHRIFT

(11) **EP 3 717 935 B1**
(45) Veröffentlichungstag und Bekanntmachung des Hinweises auf die Patenterteilung: **28.06.2023**
(21) Anmeldenummer: 18811804.6
(22) Anmeldetag: 30.11.2018
(51) Int. Cl.: G01S 7/52, G01S 7/521, G01S 7/523, G01S 15/10, G01S 15/87, G01S 15/93, G01S 15/931

(54) **VERFAHREN ZUR ÜBERPRÜFUNG EINER WENIGSTENS EINEN ULTRASCHALLSENSOR AUFWEISENDEN ABSTANDSMESSVORRICHTUNG EINES KRAFTFAHRZEUGS**
METHOD FOR CHECKING A DISTANCE MEASURING DEVICE OF A MOTOR VEHICLE, SAID DISTANCE MEASURING DEVICE HAVING AN ULTRASONIC SENSOR
PROCÉDÉ DE CONTRÔLE D'UN DISPOSITIF DE MESURE DE DISTANCE D'UN VÉHICULE À MOTEUR COMPRENANT AU MOINS UN CAPTEUR À ULTRASONS

(30) Priorität: 01.12.2017 DE 102017221692
(43) Veröffentlichungstag der Anmeldung: 07.10.2020
(73) Patentinhaber: Volkswagen Aktiengesellschaft, 38440 Wolfsburg (DE)
(72) Erfinder: GÜNZEL, Thorben, 38118 Braunschweig (DE); BRENNECKE, Lynn, 38122 Braunschweig (DE); ERNESTI, Tilo, 71711 Murr (DE); HORNUNG, Norman, 38518 Gifhorn (DE); BRANDES, Jan, 38179 Schwülper (DE)
(86) Internationale Anmeldenummer: PCT/EP2018/083093
(87) Internationale Veröffentlichungsnummer: WO 2019/106131

(56) Entgegenhaltungen:
- EP-A1- 2 000 822
- WO-A1-2007/026211
- WO-A1-2015/071110
- DE-A1-102008 022 971
- DE-A1-102009 031 561
- DE-A1-102010 051 493
- DE-A1-102015 103 542
- US-A1- 2002 047 780

## Beschreibung

Die Erfindung betrifft ein Verfahren zur Überprüfung einer wenigstens einen Ultraschallsensor aufweisenden Abstandsmessvorrichtung eines Kraftfahrzeugs mit den Merkmalen vom Oberbegriff des Patentanspruchs 1.

Nahezu jedes Kraftfahrzeug weist heute eine auf Ultraschallsensoren basierende Abstandsmessvorrichtung auf. Dabei sind zumeist mehrere Ultraschallsensoren sowohl in der vorderen Stoßfängerverkleidung als auch in der hinteren Stoßfängerverkleidung des Kraftfahrzeugs montiert. Ebenfalls in den vorderen seitlichen und den hinteren seitlichen Verkleidungsbereichen sind Ultraschallsensoren verbaut.

Die Abstandsmessvorrichtung dient in erster Linie als Einparkhilfe beim Einparken in Parklücken oder auch beim Rangieren des Kraftfahrzeugs zur Erzeugung von Kollisionswarnungen des Fahrers bei zu dicht werdenden Abständen. Dabei werden mitunter in Abhängigkeit der Sensordaten auch Eingriffe in Lenkung und Bremse des Kraftfahrzeugs durchgeführt.

Es versteht sich von selbst, dass eine einwandfreie Funktion der Ultraschallsensoren gewährleistet sein muss, damit die Abstandsmessvorrichtung des Kraftfahrzeugs sowie davon abhängige Systeme korrekt arbeiten und sich der Fahrer auf entsprechende Warnsignale verlassen kann.

Die Funktionsweise von Abstandserfassungsvorrichtungen auf Ultraschallbasis ist aus dem Stand der Technik hinreichend bekannt und braucht daher im Rahmen dieser Erfindung nicht noch einmal erläutert zu werden.

Aus der DE 10 2005 013 589 A1 ist ein Verfahren zur Funktionsüberprüfung einer wenigstens zwei Ultraschallsensoren aufweisenden Abstandsmessvorrichtung mit den Merkmalen vom Oberbegriff des Patentanspruchs 1 bekannt. Konkret wird ein von einem zweiten Ultraschallsensor der Abstandsmessvorrichtung ausgesendetes Signal ohne Reflexion an einem externen Hindernis zu dem ersten Ultraschallsensor geleitet. Bei einem Empfangen des von dem zweiten Sensor ausgesendeten Signals durch den ersten Sensor wird ein Funktionieren des ersten Sensors festgestellt. Ein korrektes Empfangen des von dem zweiten Sensor ausgesendeten Signals wird allerdings erst dann festgestellt, wenn die Signalamplitude des Signals einen applikationsbedingten, bestimmbaren Grenzwert bei einer Vielzahl aufeinander folgender Messungen überschreitet. Anderenfalls wird eine Warnung über eine Funktionsbeeinträchtigung des ersten Sensors an einen Fahrer ausgegeben. Es werden bei dieser Lösung also die körperschallbedingten Übersprechsignale zwischen zwei benachbarten Sensoren zur Funktionskontrolle ausgewertet, wobei durch den Grenzwert insbesondere eine schleichenden Erblindung eines Ultraschallsensors, beispielsweise durch Vereisung, Verschmutzung oder Alterung erfasst werden soll.

Auch die ebenfalls die Merkmale vom Oberbegriff des Patentanspruchs 1 aufweisende EP 1 058 126 B1 beschäftigt sich mit der Problematik einer schleichenden Erblindung einer Abstandserfassungsvorrichtung im Stoßfänger eines Kraftfahrzeugs durch Schnee, Eis, Schmutz und dergleichen. Das Dokument macht sich ebenfalls die körperschallbedingten Übersprechsignale von benachbarten Ultraschallsensoren zur Erfassung einer Verschmutzung zunutze. Wenn die Intensität eines von einem ersten Ultraschallsensor ausgesendeten Übersprechsignals, welches von einem zweiten, daneben befindlichen Ultraschallsensor empfangen wird, einen bestimmten Grenzwert unterschreitet, so wird durch eine Störungsbestimmungseinrichtung eine Funktionsbeeinträchtigung des ersten Ultraschallsensors konstatiert und ein visuelles oder akustisches Warnsignal an einen Benutzer ausgegeben.

Verfahren zur Erkennung einer Dejustage von Ultraschallsensoren sind aus DE 10 2008 022971 A1 sowie DE 10 2009 031561 A1 bekannt.

Der vorliegenden Erfindung liegt die Aufgabe zu Grunde, ein Verfahren zur Überprüfung einer wenigstens einen Ultraschallsensor aufweisenden Abstandsmessvorrichtung eines Kraftfahrzeugs bereitzustellen, welches einen alternativen Ansatz zur Funktionsüberprüfung einer Abstandsmessvorrichtung bietet.

Hinsichtlich des Verfahrens wird die Aufgabe gelöst durch ein Verfahren mit den Merkmalen von Patentanspruch 1.

Vorteilhafte Ausführungsformen beziehungsweise Weiterbildungen der Erfindung sind den jeweils abhängigen Ansprüchen zu entnehmen.

Die Erfindung geht aus von einem Verfahren zur Überprüfung einer wenigstens einen Ultraschallsensor aufweisenden Abstandsmessvorrichtung eines Kraftfahrzeugs, bei dem eine Funktionsbeeinträchtigung des Ultraschallsensors erkannt wird.

Die Erfindung schlägt nun vor, dass überprüft wird, ob eine Dejustage des Ultraschallsensors vorliegt. Die Erfindung verfolgt also einen gänzlich anderen Ansatz als der bekannte Stand der Technik, welcher lediglich einer durch Verschmutzung bedingten, schleichenden Verschlechterung einer Abstandsmessvorrichtung entgegentreten will.

Durch Überprüfung von Dejustagemerkmalen kann somit eine weitere entscheidende und häufig vorkommende Fehlerquelle einer Abstandsmessvorrichtung identifiziert werden. Eine Dejustage eines Ultraschallsensors kann durch verschiedene Ursachen ausgelöst werden:
- durch Abfallen der Sensorhalterung mitsamt Ultraschallsensor vom Stoßfänger auf Grund unzureichender Haftung
- durch Herausfallen des Ultraschallsensors aus der Sensorhalterung
- durch Krafteinwirkung von außen, beispielsweise durch Verformung des Stoßfängers infolge eines Parkremplers
- auf Grund von Fertigungstoleranzen

Eine Dejustage des Ultraschallsensors kann dazu führen, dass seine Reichweite signifikant abnimmt beziehungsweise dass fehlerhafte Abstände ausgegeben werden.

Gemäß einer ersten Weiterbildung des Verfahrens wird vorgeschlagen, dass bei erkannter Dejustage des wenigstens einen Ultraschallsensors ein optischer und/oder akustischer Hinweis an den Fahrer abgegeben wird und/oder vorher festgelegte Funktionen automatisch deaktiviert werden. Die vorher festgelegten Funktionen sind insbesondere solche Funktionen, die auf den Abstandsinformationen des wenigstens einen als dejustiert erkannten Ultraschallsensor basieren. Dies gilt insbesondere für Funktionen, die in die Lenkung und/oder Bremsung des Kraftfahrzeugs eingreifen, Durch diese Verfahrensausprägung kann somit ein hohes Maß an Sicherheit im Fall einer Funktionsbeeinträchtigung eines Ultraschallsensors erzielt werden.

Erfindungsgemäß wird vorgeschlagen, dass gemessen wird, ob der Ultraschallsensor dauerhaft einen Abstand in einem Nahbereich misst oder ob der Ultraschallsensor zeitlich stark schwankende (fluktuierende) Abstände im Nahbereich misst. Bei Bejahung einer dieser Bedingungen wird auf eine Dejustage des Ultraschallsensors geschlossen. Als Nahbereich können beispielsweise Abstände unter 30 cm definiert werden.

Diese Verfahrensausbildung eignet sich sehr gut dazu, um die Dejustagemerkmale zu erkennen, die darauf schließen lassen, dass der Ultraschallsensor aus seiner Sensorhalterung gefallen ist oder die Sensorhalterung mitsamt Ultraschallsensor abgefallen ist.

In solchen Fällen misst der Ultraschallsensor sehr nahe Abstände zu einem Untergrund, zu Bauteilen des Kraftfahrzeugs und/oder zur Stoßfängerinnenseite. Zudem baumelt der Ultraschallsensor an seinem Anschlusskabel und bewegt sich infolgedessen ständig beim Anfahren, Bremsen und während der normalen Fahrbewegung des Kraftfahrzeugs. Die gemessenen Abstände überschreiten einen bestimmten Abstandswert nicht mehr und schwanken sehr stark.

Allerdings ist es denkbar, dass auf Grund starker externer Störschallquellen ebenfalls stark schwankende Messwerte auftreten. Hierzu sind Filtermechanismen bekannt, welche prüfen, ob eine solche externe Störung vorliegt, bei der typischerweise alle Ultraschallsensoren eines Stoßfängers betroffen sind.

In diesem Fall muss akzeptiert werden, dass eine Dejustageüberprüfung mit der genannten Methode vorübergehend nicht möglich ist. Eine Meldung über die vorübergehende Störung kann dann vorzugsweise dem Fahrer ausgegeben werden.

Ein alternatives erfindungsgemäßes Verfahren schlägt vor, dass gemessen wird, ob von wenigstens einem, dem zu prüfenden Ultraschallsensor direkt benachbarten Ultraschallsensor ein Körperschallsignal von dem zu prüfenden Ultraschallsensor empfangen wird. Bei Verneinung dieser Bedingung wird ebenfalls auf eine Dejustage des zu prüfenden Ultraschallsensors geschlossen.

Diese Verfahrensausprägung macht sich also die Eigenschaft zunutze, dass ein Ultraschall-Sendesignal (Sendeimpuls) eines Ultraschallsensors mittels Körperschall über den Stoßfänger ebenfalls an die direkt benachbarten Ultraschallsensoren übermittelt wird.

Werden von den benachbarten Ultraschallsensoren keine Signale mittels Körperschall mehr von einem zu prüfenden Ultraschallsensor empfangen, kann dies als Dejustagemerkmal des zu prüfenden Ultraschallsensors verwendet werden.

Allerdings kann diese Verfahrensausprägung in der Aussagekraft dann eingeschränkt sein, wenn Ultraschallsensoren mit Eis oder Schnee bedeckt sind. Dies führt ebenfalls dazu, dass kein Signal mehr über Körperschall übermittelt wird.

Hierzu wird gemäß einer Weiterbildung vorgeschlagen, dass vor Feststellung einer vorliegenden Dejustage des Ultraschallsensors bei ausbleibendem Körperschallsignal die Außentemperatur gemessen und bei einer Außentemperatur um den Gefrierpunkt wenigstens ein sensorspezifischer Parameter des Ultraschallsensors gemessen wird. Bei einer Abweichung des sensorspezifischen Parameters von einem Normwert wird auf eine vorübergehende, schnee- oder eisbedingte Funktionsstörung des Ultraschallsensors geschlossen.

Als sensorspezifischer Parameter kann beispielsweise die Ausschwingzeit des Ultraschallsensors überprüft werden. Diese weicht bei einem blockierten Zustand des Ultraschallsensors durch Eis oder Schnee signifikant von der durchschnittlichen Ausschwingzeit ab.

Im Fall einer solchen schnee- oder eisbedingten Funktionsstörung ist eine sichere Dejustageerkennung also nicht möglich und es kann als Warnmeldung an den Fahrer der Hinweis auf eine vorübergehende, schnee- oder eisbedingte Funktionsstörung gegeben werden.

Ein alternatives erfindungsgemäßes Verfahren schlägt vor, dass bei Annäherung an ein Objekt überprüft wird, ob das Objekt durch mehrere Ultraschallsensoren einer Gruppe von Ultraschallsensoren erfasst wird. Bei Bejahung dieser Bedingung wird überprüft, ob das Objekt durch einen Ultraschallsensor der Gruppe nicht erfasst wird. Bei Bejahung der letzteren Bedingung wird auf eine Dejustage desjenigen Ultraschallsensors aus der Gruppe geschlossen, durch welchen das Objekt nicht erfasst wurde.

Diese Verfahrensausprägung ist insbesondere dazu geeignet, eine Sensordejustage zu erkennen, wenn der Ultraschallsensor noch in der Sensorhalterung verbaut ist und die Sensorhalterung weiterhin am Stoßfänger befestigt ist. Dies kann beispielsweise durch eine Verformung des Stoßfängers infolge eines Unfalls oder eines Parkremplers auftreten.

Es wird dabei also das Echobild benachbarter Ultraschallsensoren bei Annäherung an ein Objekt im Fahrzeugumfeld ausgewertet. Ein Objekt mit einer deutlichen Flächenausdehnung (z. B. ein Kraftfahrzeug) wird typischerweise von mehreren Ultraschallsensoren gleichzeitig detektiert. Durch Auswertung der Echobilder benachbarter Ultraschallsensoren kann somit ein dejustierter Ultraschallsensor erkannt werden. Allerdings ist die Erkennung dabei auch abhängig von der positionsspezifischen Empfindlichkeit eines Ultraschallsensors in Bezug auf das Objekt.

Daher schlägt eine Weiterbildung des Verfahrens auch vor, dass in diesem Fall nur dann auf eine Dejustage des das Objekt nicht erfassenden Ultraschallsensors geschlossen wird, wenn der Ultraschallsensor zwischen zwei anderen Ultraschallsensoren aus der Gruppe verbaut ist und sich die Detektionsbereiche der Ultraschallsensoren überschneiden. Besteht die Gruppe also beispielsweise aus drei nebeneinander angeordneten Ultraschallsensoren, von denen die beiden äußeren Ultraschallsensoren ein Objekt erkennen, der mittlere Ultraschallsensor jedoch nicht, so kann mit ziemlicher Sicherheit von einer Dejustage des mittleren Ultraschallsensors ausgegangen werden.

Hierbei wird davon ausgegangen, dass zuvor eine allgemeine Funktionsüberprüfung ein bestehendes Funktionieren des Ultraschallsensors bestätigt hat. Es darf also kein Totalausfall des Ultraschallsensors vorliegen. Mit anderen Worten ist der Ultraschallsensor noch in der Lage, Ultraschall-Sendesignale zu versenden und Echosignale zu empfangen. Diese Voraussetzung gilt auch für die zuvor genannten Methoden zur Dejustageerkennung.

Ein alternatives erfindungsgemäßes Verfahren, welches ebenfalls besonders zur Erkennung des zuvor genannten Dejustagefalls geeignet ist, besteht darin, bei Ausschalten der Zündung (also vor einem Abstellen beziehungsweise Parken des Kraftfahrzeugs) durch den Ultraschallsensor ein Referenz-Echobild von dem das Kraftfahrzeug umgebenden Untergrund anzufertigen. Nach dem erneuten Einschalten der Zündung oder nach dem Öffnen des Fahrzeugs wird ein weiteres Echobild von dem das Kraftfahrzeug umgebenden Untergrund angefertigt. Das Echobild wird mit dem Referenz-Echobild verglichen. Bei einer Abweichung der Echobilder wird auf eine Dejustage des Ultraschallsensors geschlossen.

Denkbar ist beispielsweise, dass das Referenz-Echobild einen gemessenen Abstand zum Untergrund von 70 Zentimetern zeigt, während nach dem erneuten Einschalten der Zündung oder nach dem Öffnen des Fahrzeugs gar keine Echos mehr vom Untergrund empfangen werden können. Umgekehrt ist denkbar, dass das Referenz-Echobild einen Bodenabstand von zirka 70 Zentimeter offenbart, das nach dem Einschalten angefertigte Echobild jedoch einen reduzierten Abstand zum Boden zeigt, beispielsweise einen Abstand von 40 Zentimetern.

Allerdings sind auch hierbei Situationen denkbar, bei denen diese Verfahrensausprägung nur eingeschränkt einsetzbar ist. So kann sich beispielsweise der Untergrund witterungsbedingt zwischen einem Abstellen des Fahrzeugs und einem erneuten Starten des Fahrzeugs z. B. infolge von starkem Schneefall ändern. Hierbei ist es denkbar, zusätzlich durch ein Kamerasystem zu detektieren, ob Schneefall stattgefunden hat oder nicht. Wenn ja, kann eine solche Verfahrensausprägung elektronisch deaktiviert werden.

Allerdings ist es auch nicht gänzlich auszuschließen, dass bereits bei der Produktion eines Kraftfahrzeugs im Werk eine Dejustage aufgetreten ist.

Um hierdurch bedingte "Folgefehler" ausschließen zu können, wird gemäß einem alternativen erfindungsgemäßen Verfahren vorgeschlagen, nach einer Montage des Kraftfahrzeugs im produzierenden Werk ein Echobild von dem das Kraftfahrzeug umgebenden, ebenen Hallen-Untergrund anzufertigen. Das Echobild wird dann mit einem Initial-Echobild verglichen, welches gemäß der fahrzeugspezifischen Applikation des Ultraschallsensors bei einem ebenen Untergrund zu erwarten ist. Bei einer toleranzüberschreitenden Abweichung der Echobilder wird auf eine montagebedingte Dejustage des Ultraschallsensors geschlossen. Dann kann der dejustierte Ultraschallsensor bereits im Werk ersetzt und neu kalibriert werden.

Bei der Erstellung der Echobilder vom Untergrund werden jedoch zweckmäßigerweise nur Echosignale von als niedrig klassifizierten Objekten verwendet. Echosignale von als hoch klassifizierten Objekten stammen nicht vom Untergrund beziehungsweise Boden und können sich gegebenenfalls dynamisch ändern. Ein als hoch klassifiziertes Objekt kann beispielsweise ein benachbartes, parkendes Fahrzeug sein, welches zwischenzeitlich wieder weggefahren ist. Denkbar sind auch flachere Gegenstände, beispielsweise eine Kiste, die beim Abstellen des Fahrzeugs vorhanden war, vor dem anschließenden Starten des Fahrzeugs jedoch wieder weggenommen wurde.

Wird mit einer der zuvor beschriebenen Verfahrensausprägungen sicher festgestellt, dass eine Dejustage des Ultraschallsensors vorliegt, so werden, wie bereits erwähnt, zusätzlich zu einer entsprechenden Warnung an den Fahrer vorzugsweise auch Funktionen, die auf Basis des dejustierten Ultraschallsensors arbeiten, deaktiviert oder zumindest reduziert.

Eine derartige Funktion kann nun beispielsweise der Eingriff in die Lenkung oder Bremsung des Fahrzeugs sein, um beispielsweise den Fahrer beim Einparken in Parklücken zu unterstützen oder eine Kollision mittels eines Notbremseingriffs zu verhindern beziehungsweise zu mindern.

Schließlich wird erfindungsgemäß vorgeschlagen, dass nach Einschalten der Zündung oder nach dem Öffnen des Fahrzeugs zyklisch geprüft wird, ob eine Überprüfung des Ultraschallsensors auf Dejustage gemäß einer der vorhergehend beschriebenen Verfahrensausprägung ordnungsgemäß möglich war. Nach Überschreitung einer bestimmten Zeit oder einer bestimmten Wegstrecke nach Einschalten der Zündung oder nach dem Öffnen des Fahrzeugs, nach der eine solche ordnungsgemäße Überprüfung des Ultraschallsensors nicht möglich war, erfolgt eine Auswertung von gespeicherten Werten von Beschleunigungssensoren des Kraftfahrzeugs. Die Auswertung erfolgt dahingehend, ob ein Crash oder eine Manipulation des Kraftfahrzeugs (z.B. Diebstahlversuch) stattgefunden hat. Die Beschleunigungssensoren können beispielsweise Precrash-Sensoren oder auch Sensoren einer Diebstahlwarnanlage sein.

Falls offenbar ein Crash oder eine Manipulation des Kraftfahrzeugs stattgefunden hat, wird auf eine crash- oder manipulationsbedingte Dejustage des Ultraschallsensors geschlossen. Es wird eine optische und/oder akustische Warnung ausgegeben. Funktionen, die auf Basis von Signalen des dejustierten Ultraschallsensors arbeiten, werden deaktiviert oder zumindest wird deren Funktionsumfang reduziert.

In einer weiteren Ausbildung des erfindungsgemäßen Verfahrens wird vor Feststellung einer vorliegenden Dejustage des Ultraschallsensors wenigstens ein sensorspezifischer Parameter des Ultraschallsensors gemessen. Bei einer Abweichung des sensorspezifischen Parameters von einem Normwert wird auf eine Funktionsstörung des Ultraschallsensors durch Störschall geschlossen. Hier wird vorteilhaft die Eigenschaft von Ultraschallsensoren ausgenutzt, dass sich deren sensorspezifische Werte (bspw. Schwingamplitude, Echos, Ausschwingzeit, Laufzeit, Leistung, etc.) unter Einfluss einer Störschallquelle signifikant ändern.

Ein zur Durchführung des erfindungsgemäßen Verfahrens beispielhaft geeignetes Kraftfahrzeug ist mit einer, mehrere Ultraschallsensoren aufweisenden Abstandsmessvorrichtung ausgestattet. Ferner weist das Kraftfahrzeug wenigstens einen Außentemperaturfühler, mehrere Beschleunigungssensoren zur Detektion eines Crashs und/oder einer Manipulation eines Kraftfahrzeugs sowie wenigstens eine Speichereinheit zur Speicherung von Daten der Beschleunigungssensoren und/oder zur Abspeicherung von Echobildern der Ultraschallsensoren auf. Ferner ist wenigstens ein Zeit- oder Weggeber zur Ausgabe eines seit Einschalten der Zündung oder seit Öffnen des Kraftfahrzeugs vergangenen Zeit- oder Wegwertes vorhanden. Ebenso wenigstens eine Vergleichseinheit zum Vergleich von erstellten und abgespeicherten Echobildern und/oder zum Vergleich des Zeit- oder Wegwertes mit einem abgelegten Grenzwert. Die Vergleichseinheit kann auch zum Vergleich der abgespeicherten Beschleunigungswerte mit Grenzwerten dienen, welche auf einen Crash oder eine Manipulation des Fahrzeugs schließen lassen. Des Weiteren ist wenigstens eine optische und/oder akustische Ausgabeeinheit zur Ausgabe von Warnmeldungen vorhanden. Schließlich weist das Kraftfahrzeug wenigstens eine Auswerte- und Steuereinrichtung zur Auswertung von Signalen der Ultraschallsensoren, zur Ansteuerung der optischen und/oder akustischen Ausgabeeinheit sowie zur Ansteuerung von Komponenten auf, welche auf Basis von Signalen der Ultraschallsensoren arbeiten.

Die Auswerte- und Steuereinrichtung kann die Ultraschallsensoren, die Beschleunigungssensoren, die Speichereinheit, den Zeit- oder Weggeber, die Vergleichseinheit, die besagten Komponenten sowie die optische und/oder akustische Ausgabeeinheit derart ansteuern, dass das erfindungsgemäße Verfahren durchführbar und eine Dejustage von Ultraschallsensoren feststellbar ist.

Bei einer festgestellten Dejustage wenigstens eines der Ultraschallsensoren sind durch die Auswerte- und Steuereinrichtung Komponenten, welche auf Basis von Signalen des dejustierten Ultraschallsensors arbeiten, derart ansteuerbar oder werden derart angesteuert, dass deren Funktion deaktiviert oder zumindest deren Funktionsumfang reduziert wird. Beispielsweise ist denkbar, dass bei einer Dejustage eines eine Einparkhilfe oder einen Parklenkassistenten betreffenden Ultraschallsensors, die Auswerte- und Steuereinrichtung Funktionen der Einparkhilfe oder des Parklenkassistenten reduziert und beispielsweise einen Eingriff in die Lenkung des Kraftfahrzeugs durch den Parklenkassistenten nicht mehr zulässt. Bevorzugte Ausführungsbeispiele der Erfindung sind in den Figuren dargestellt und werden anhand der Figuren in der nachfolgenden Beschreibung näher erläutert. Dadurch werden auch noch weitere Vorteile der Erfindung deutlich. Gleiche Bezugszeichen, auch in unterschiedlichen Figuren, beziehen sich auf gleiche, vergleichbare oder funktional gleiche Bauteile. Dabei werden entsprechende oder vergleichbare Eigenschaften und Vorteile erreicht, auch wenn eine wiederholte Beschreibung oder Bezugnahme darauf nicht erfolgt. Die Figuren sind nicht immer maßstabsgetreu. In manchen Figuren können Proportionen übertrieben dargestellt sein, um Merkmale eines Ausführungsbeispiels deutlicher hervorheben zu können.

Es zeigen, jeweils schematisch
- Fig. 1: ein Ablaufdiagramm zur Erläuterung des erfindungsgemäßen Verfahrens,
- Fig. 2: ein Kraftfahrzeug zur Durchführung des erfindungsgemäßen Verfahrens,
- Figuren 3: die Erläuterung einer bestimmten Verfahrensausprägung,
- Figuren 4: die Erläuterung einer weiteren Verfahrensausprägung und
- Fig. 5: die Erläuterung noch einer weiteren Verfahrensausprägung.

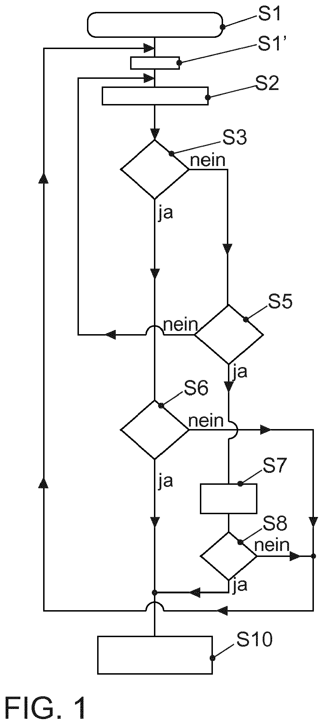

Zunächst wird auf die Fig. 1 Bezug genommen. Diese Figur zeigt ein Ablaufdiagramm, welches das erfindungsgemäße Verfahren näher erläutert. So erfolgt in einem Verfahrensschritt S1 die Einschaltung der Zündung eines Kraftfahrzeugs. In einem Verfahrensschritt S1' wird ein Zeit- oder Weggeber gestartet.

In einem zweiten Verfahrensschritt S2 erfolgt eine Dejustage-Überprüfung von vorhandenen Ultraschallsensoren nach einer der vorhergehend beschriebenen Methoden.

In einem Verfahrensschritt S3 wird abgefragt, ob eine ordnungsgemäße Dejustageüberprüfung mit einer der Methoden seit einem Einschalten der Zündung oder seit Öffnen des Kraftfahrzeugs möglich war.

Wenn dies zutrifft wird in einem Verfahrensschritt S6 abgefragt, ob bei der Dejustageüberprüfung gemäß Verfahrensschritt S2 eine Dejustage sicher erkannt wurde. Trifft dies zu, so wird in einem Verfahrensschritt S10 eine akustische und/oder optische Warnung an den Fahrer ausgegeben. Diese weist darauf hin, dass die Dejustage eines Ultraschallsensors festgestellt wurde und daher eine einwandfreie Funktion nicht mehr möglich ist. Funktionen beziehungsweise Komponenten, welche auf Basis von Signalen des dejustierten Ultraschallsensors arbeiten, werden derart angesteuert, dass deren Funktion deaktiviert oder zumindest deren Funktionsumfang reduziert wird. Hierüber erfolgt ebenso eine Meldung an den Fahrer.

Wird im Verfahrensschritt S6 jedoch festgestellt, dass bei der Dejustageüberprüfung keine Dejustage festgestellt werden konnte, so erfolgt erneut eine Dejustage-Überprüfung in Verfahrensschritt S2.

Wurde im Verfahrensschritt S3 erkannt, dass seit Einschaltung der Zündung oder seit Öffnen des Kraftfahrzeugs bzw. seit Starten des Zeit- oder Weggebers keine ordnungsgemäße Dejustageüberprüfung gemäß einer der Methoden in Verfahrensschritt S2 möglich war, so wird in einem Verfahrensschritt S5 abgefragt, ob ein bestimmter Grenzwert des gestarteten Zeit- oder Wegzählers (vergleiche Verfahrensschritt S1') erreicht wurde. Falls noch nicht, so erfolgt eine zyklische Wiederholung der Dejustage-Überprüfung gemäß Verfahrensschritt S2.

Wurde in Verfahrensschritt S5 jedoch die Erreichung eines bestimmten Grenzwertes vom Zeit- oder Wegzähler festgestellt, so erfolgt in einem Verfahrensschritt S7 die Auswertung von Daten von Beschleunigungssensoren des Kraftfahrzeugs. Es erfolgt die Auswertung solcher Beschleunigungssensoren, welche Daten eines Crashs oder eines unberechtigten Manipulationsversuchs abspeichern können. Derartige Beschleunigungssensoren können beispielsweise Sensoren eines Rückhaltesystems (z. B. Airbag) oder auch einer Diebstahlwarnanlage sein.

In einem Verfahrensschritt S8 wird abgefragt, ob auf Grund der Werte der Beschleunigungssensoren ein Crash oder eine Manipulation erkannt wurde. Falls ja, wird ebenfalls davon ausgegangen, dass auf Grund des Crashs oder der erfolgten Manipulation eine Dejustage von Ultraschallsensoren stattgefunden hat und es wird wiederum gemäß Verfahrensschritt S10 eine entsprechende Warnung ausgegeben, verbunden mit einer Deaktivierung oder zumindest Reduzierung der betroffenen Funktionen.

Falls in Verfahrensschritt S8 jedoch weder ein Crash noch eine Manipulation zu erkennen sind, so erfolgt in Verfahrensschritt S1' ein Rücksetzen und erneutes Starten des Zeit- oder Wegzählers. Anschließend erfolgt eine erneute Dejustageüberprüfung mit den zur Verfügung stehenden Methoden bei Verfahrensschritt S2.

Wurde in Verfahrensschritt S6 festgestellt, dass eine Dejustage durch keine der in Verfahrensschritt S2 durchgeführten Methoden zur Dejustage-Überprüfung erkannt wurde, so gelangt man von Verfahrensschritt S6 ebenfalls unmittelbar zurück zum Verfahrensschritt S1', wodurch das geschilderte Verfahren erneut durchgeführt wird.

Dadurch, dass in Verfahrensschritt S2 die Dejustage-Überprüfung nicht nur durch eine Methode, sondern durch mehrere Methoden durchgeführt wird, kann die Möglichkeit einer Dejustageerkennung eines Ultraschallsensors signifikant erhöht werden. Zusätzlich wird eine Erkennungswahrscheinlichkeit von dejustierten Sensoren noch durch den Verfahrensschritt S7 erhöht, indem sozusagen noch weitere Datenquellen angezapft werden, die auf eine Dejustage hinweisen können.

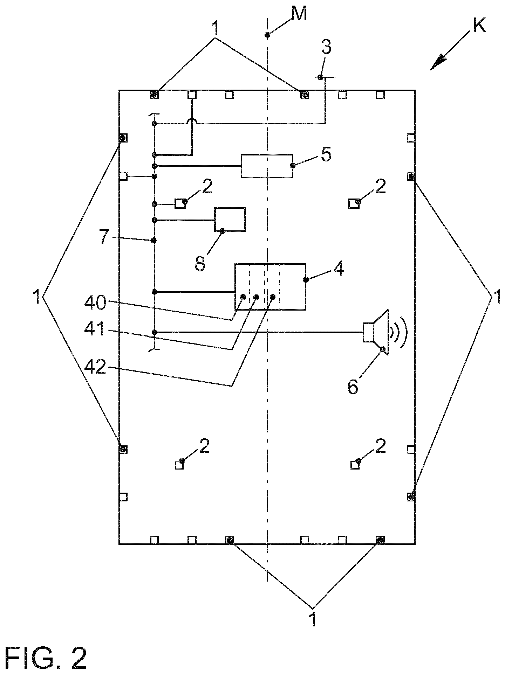

Fig. 2 zeigt nun ein Kraftfahrzeug K, welches zur Durchführung des erfindungsgemäßen Verfahrens hergerichtet ist.

So ist das Kraftfahrzeug K mit einer Abstandsmessvorrichtung ausgestattet, welche eine Vielzahl von Ultraschallsensoren 1 umfasst. Mit M ist eine Längsmittenebene des Kraftfahrzeugs K angedeutet.

Es ist ersichtlich, dass die Ultraschallsensoren 1 an der Front und am Heck des Kraftfahrzeugs K, jeweils links als auch rechts der Längsmittenebene M angeordnet sind. Des Weiteren sind auch Ultraschallsensoren 1 an den Seiten des Kraftfahrzeugs K, und zwar jeweils im Front- und im Heckbereich angeordnet.

Das Kraftfahrzeug K verfügt auch über mehrere Beschleunigungssensoren 2, welche Längs-, Quer- und auch Gierbeschleunigungen erfassen können. Die Beschleunigungssensoren 2 gehören zu einem nicht näher dargestellten Rückhaltesystem sowie zu einer ebenfalls nicht näher dargestellten Diebstahlwarnanlage.

Ein Temperaturfühler 3 dient zur Erfassung der Außentemperatur.

Ferner verfügt das Kraftfahrzeug K über eine Anzeige- und Bedieneinrichtung 5, welche also auch als optische Ausgabeeinheit fungiert und vorzugsweise als Touchscreen ausgebildet ist. Eine akustische Signaleinrichtung 6 dient zur Ausgabe von akustischen Warnsignalen, beispielsweise bei einem Einparkvorgang.

Schließlich verfügt das Kraftfahrzeug K über eine Auswerte- und Steuereinrichtung 4. Die Auswerte- und Steuereinrichtung 4 ist über einen Datenbus 7 mit den zuvor genannten Komponenten des Kraftfahrzeugs daten- und steuertechnisch verbunden.

Der Übersichtlichkeit halber sind beispielhaft nur wenige der Ultraschallsensoren 1 beziehungsweise der Beschleunigungssensoren 2 mit dem Datenbus 7 verbunden. Der Datenbus 7 ist vorzugsweise als CAN- oder LIN-Bus ausgebildet.

Die Auswerte- und Steuereinrichtung 4 ist in der Lage, Daten der genannten Komponenten derart abzufragen und auszuwerten und diese Komponenten derart anzusteuern, dass die verschiedenen Methoden zur Dejustageerkennung einer oder mehrerer der Ultraschallsensoren 1 durchgeführt werden können und das beschriebene Verfahren durchführbar ist. Dazu weist die Auswerte- und Steuereinrichtung 4 auch eine Speichereinheit 40 auf, in der Daten der Beschleunigungssensoren 2 und Echobilder der Ultraschallsensoren 1 abgespeichert werden können. Ein Zeit- oder Weggeber 41 dient dazu, nach Einschalten eines Kraftfahrzeugs Zeit- oder Wegwerte hochzuzählen.

Abgespeicherte Echobilder der Ultraschallsensoren 1 können in einer Vergleichseinheit 42 miteinander verglichen werden. Die Vergleichseinheit 42 dient auch zum Vergleich von Istwerten mit bestimmten oder bestimmbaren Grenzwerten. Beispielsweise erfolgt in der Vergleichseinheit 42 ein Vergleich eines aktuellen Zeit- oder Wegwertes mit einem abgespeicherten Grenzwert. Es kann in der Vergleichseinheit 42 auch ein Vergleich von abgespeicherten Werten der Beschleunigungssensoren 2 mit Beschleunigungsgrenzwerten erfolgen, welche auf einen erfolgten Crash oder eine Manipulation des Kraftfahrzeugs schließen lassen.

Wird auf Grund der von der Auswerte- und Steuereinrichtung 4 ausgewerteten Daten die Dejustage eines der Ultraschallsensoren 1 festgestellt, so erfolgt eine Ansteuerung der Anzeige- und Bedieneinrichtung 5 und/oder der akustischen Signaleinrichtung 6 dahingehend, dass eine optische und/oder akustische Warnung an einen Fahrer ausgegeben wird. Des Weiteren werden Funktionen von derartigen Komponenten des Kraftfahrzeugs K deaktiviert oder es zumindest der Funktionsumfang derjenigen Komponenten reduziert, welche auf Grund der Daten des dejustierten Ultraschallsensors 1 arbeiten. Hierüber erfolgt ebenfalls eine Meldung an den Fahrer.

Beispielhaft ist ein Einpark-Hilfssystem 8 angedeutet, welches zum aktiven Unterstützen eines Einparkvorgangs dient. Dabei greift das Einpark-Hilfssystem 8 aktiv in die Lenkung des

Kraftfahrzeugs ein. Ist nun ein Ultraschallsensor 1 oder sind gar mehrere Ultraschallsensoren 1 dejustiert, auf deren Daten das Einpark-Hilfssystem 8 zurückgreift, so wird durch die Auswerte- und Steuereinrichtung 4 auch die Funktion des Einpark-Hilfssystems 8 deaktiviert. Zumindest wird der Funktionsumfang des Einpark-Hilfssystems 8 derart reduziert, dass kein Eingriff mehr in die Lenkung erfolgt.

Eine Reaktivierung deaktivierter oder reduzierter Funktionsumfänge kann ausschließlich in einer Werkstatt unter Verwendung von geeigneten Diagnosetools erfolgen, nachdem dejustierte Ultraschallsensoren 1 wieder ordnungsgemäß instandgesetzt wurden.

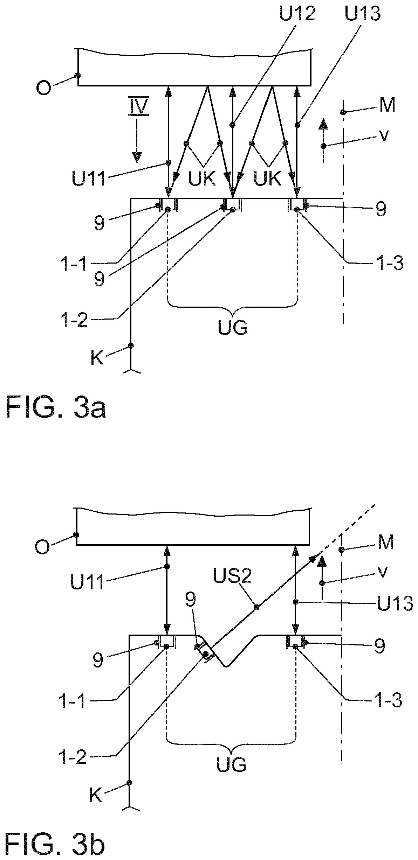

Anhand der Figuren 3 wird nun eine denkbare Methode zur Feststellung einer Dejustage näher erläutert.

So ist ein ordnungsgemäßer Zustand (Fig. 3a) des Kraftfahrzeugs K im linken Frontendbereich dargestellt. Es sind drei Ultraschallsensoren 1-1, 1-2 und 1-3 ersichtlich, welche eine Gruppe UG von Ultraschallsensoren bilden. Mit 9 sind Sensorhalterungen der Ultraschallsensoren beziffert. Die Detektionsbereiche der Ultraschallsensoren 1-1, 1-2 und 1-3 überschneiden sich.

Das Kraftfahrzeug K fährt mit einer geringen Geschwindigkeit v in Richtung auf ein stehendes Objekt O. Dies weist eine bestimmte Flächenerstreckung auf und kann beispielsweise der Stoßfänger eines anderen parkenden Kraftfahrzeugs sein.

Jeder der Ultraschallsensoren 1-1 bis 1-3 sendet ein Ultraschall-Sendesignal aus und empfängt ein durch das Objekt O reflektiertes Ultraschall-Direktecho U11, U12 und U13. Des Weiteren treten zwischen direkt benachbarten Ultraschallsensoren, also zwischen den Ultraschallsensoren 1-1 und 1-2 oder den Ultraschallsensoren 1-2 und 1-3 sogenannte Ultraschall-Kreuzechos UK auf.

Im gezeigten, ordnungsgemäßen Zustand werden von allen drei Ultraschallsensoren 1-1 bis 1-3 also Echobilder erzeugt, welche das Objekt O erkennen und von der Auswerte- und Steuereinrichtung 4 ausgewertet werden können.

Liegt eine Dejustage, beispielsweise des mittleren Ultraschallsensors 1-2 aus der Gruppe UG vor (vergleiche Fig. 3b), so wird das Objekt O lediglich durch die Ultraschallsensoren 1-1 und 1-3 erfasst. Diese Ultraschallsensoren erhalten Ultraschall-Direktechos U11 beziehungsweise U13.

Es ist ersichtlich, dass in der Fig. 3b eine Deformation des Frontends vom Kraftfahrzeug K im Bereich des Ultraschallsensors 1-2 stattgefunden hat. Grund kann beispielsweise ein Parkrempler von einem geparkten Fahrzeug sein. Zwar befindet sich der Ultraschallsensor 1-2 noch in seiner Sensorhalterung 9, jedoch ist der Ultraschallsensor 1-2 mitsamt dieser dejustiert. Ein von dem Ultraschallsensor 1-2 ausgesendetes Ultraschall-Sendesignal US2 geht am Objekt O vorbei und verpufft. Nach Auswertung der abgespeicherten Echobilder der Ultraschallsensoren 1-1 bis 1-3 stellt die Auswerte- und Steuereinrichtung 4 fest, dass das Objekt O zwar durch mehrere Ultraschallsensoren der Gruppe UG detektiert wurde, nicht jedoch durch den Ultraschallsensor 1-2, welcher zwischen den Ultraschallsensoren 1-1 und 1-3 verbaut bzw. angeordnet ist. Hieraus schließt die Auswerte- und Steuereinrichtung 4 eine Dejustage des mittleren Ultraschall-Sensors 1-2 und gibt eine entsprechende Warnung an den Fahrer heraus. Gleichzeitig erfolgt eine Funktionsreduzierung beziehungsweise Deaktivierung von Funktionen, welche auf Basis von Daten des Ultraschallsensors 1-2 beziehungsweise der Gruppe UG arbeiten.

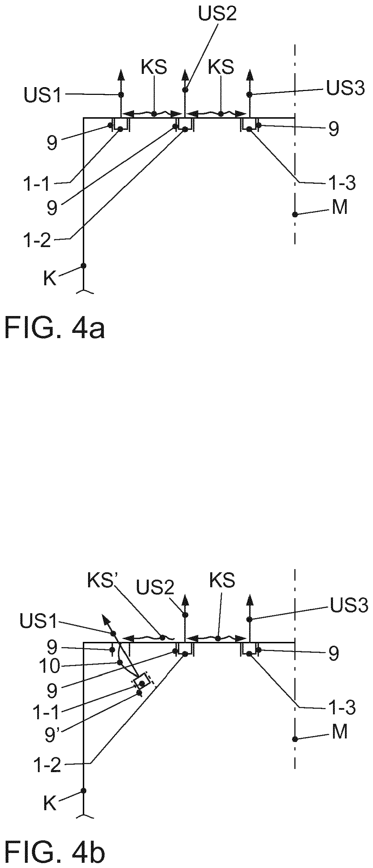

Die Figuren 4 zeigen eine weitere mögliche Methode zur Dejustageerkennung. In diesen Figuren ist der gleiche vordere Ausschnitt vom Frontendbereich des Kraftfahrzeugs K dargestellt.

Bei korrekter Justage senden die Ultraschallsensoren 1-1 bis 1-3 jeweils Ultraschall-Sendesignale US1, US2 und US3 aus. Auf Grund der ausgesendeten Ultraschall-Sendesignale (Sendeimpulse) kommt es zwischen jeweils benachbarten Ultraschallsensoren 1-1 und 1-2 sowie 1-2 und 1-3 gleichzeitig auch zur Übertragung eines Köperschalls KS (Übersprechsignal).

Liegt eine Dejustage eines Ultraschallsensors, beispielsweise des Ultraschallsensors 1-1 derart vor, dass dieser aus seiner Sensorhalterung 9 oder mitsamt dieser Halterung (vergleiche 9') herausgefallen ist und nur noch an seinem Anschlusskabel 10 hängt, so sendet der Ultraschallsensor 1-1 zwar noch ein Ultraschall-Sendesignal US1 aus, jedoch geht von diesem Ultraschallsensor 1-1 kein Körperschall KS mehr aus.

Mit anderen Worten kann der direkt benachbarte Ultraschallsensor 1-2 vom dejustierten Ultraschallsensor 1-1 kein solchen Körperschall KS mehr empfangen. Der Ultraschallsensor 1-2 sendet lediglich noch einen einseitigen Körperschall KS' in Richtung der ursprünglichen Montageposition vom Ultraschallsensor 1-1 aus.

Wenn die Auswerte- und Steuereinrichtung 4 durch eine entsprechende Auswertelogik feststellt, dass der Ultraschallsensor 1-2 trotz Funktionsfähigkeit des Ultraschallsensors 1-1 kein Körperschallsignal KS mehr von dem Ultraschallsensor 1-1 erhält, so schließt die Auswerte- und Steuereinrichtung 4 auf eine Dejustage des Ultraschallsensors 1-1.

Wiederum werden entsprechende Schritte wie Abgabe von Meldungen und Deaktivierung/Reduzierung von betroffenen Funktionen eingeleitet.

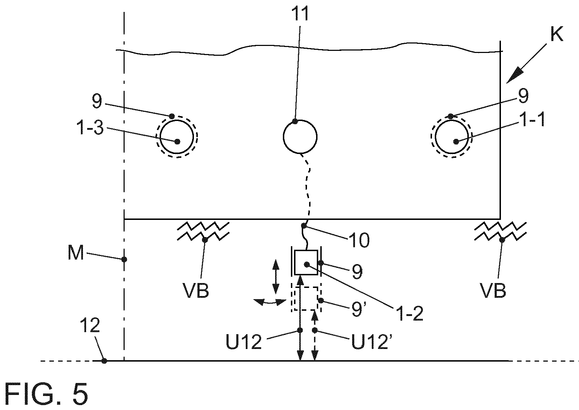

Schließlich ist noch eine weitere Möglichkeit zur Überprüfung einer Dejustage in Fig. 5 erläutert.

Hierbei ist ein Ausschnitt des Kraftfahrzeugs K aus einem Blickwinkel V der Fig. 3A dargestellt.

Konkret ist der Ultraschallsensor 1-2 mitsamt seiner Sensorhalterung 9 aus seiner Montageöffnung 11 gefallen. Der Ultraschallsensor 1-2 hängt nur noch lose an seinem Anschlusskabel 10.

Auf Grund von bei der Fahrt auftretenden Vibrationen VB des Kraftfahrzeugs K führt der Ultraschallsensor 1-2 starke vertikale und pendelnde Bewegungen aus (vergleiche Doppelpfeile). Dies führt beispielsweise dazu, dass vom Ultraschallsensor 1-2 zeitlich stark schwankende (fluktuierende) Ultraschall-Direktechos U12 beziehungsweise U12' gemessen werden, welche von einem benachbarten Objekt im Nahbereich von wenigen Zentimetern stammen. Das Objekt kann beispielsweise ein Untergrund 12 sein, dem der herausgefallene Ultraschallsensor 1-2 nun viel näher steht. Auch ist denkbar, dass das nahestehende Objekt der vordere Stoßfänger oder ein anderes Bauteil des Kraftfahrzeugs K selbst ist, hinter dem sich der dejustierte Ultraschallsensor 1-2 nun befindet.

Es kann jedoch in Zusammenhang mit den Fig. 4 auftreten, dass einer der Ultraschallsensoren 1-1 bis 1-3 mit Eis oder Schnee bedeckt ist. Dies führt dazu, dass vom betreffenden Ultraschallsensor kein Körperschall KS mehr oder zumindest nicht mehr in ausreichender Signalstärke an den benachbarten Ultraschallsensor übermittelt wird. In diesem Fall ist es denkbar, dass die Auswerte- und Steuereinrichtung 4 einen sensorspezifischen Parameter, wie beispielsweise die Ausschwingzeit des betroffenen Ultraschallsensors misst. Ist die Ausschwingzeit gegenüber dem Normalwert stark reduziert, so lässt dies darauf schließen, dass sich der Sensor auf Grund von Eis oder Schnee nur in einem blockierten Zustand befindet und gar nicht dejustiert ist. Auch hier kann eine entsprechende Meldung an den Fahrer erfolgen, dass die Funktionsfähigkeit der Ultraschallsensoren zumindest vorübergehend beeinträchtigt ist. Genauso wird verfahren, wenn eine vorübergehende Funktionsbeeinträchtigung der Ultraschallsensoren durch einen starken Ultraschallstörer im direkten Fahrzeugumfeld vorliegt.

### Bezugszeichenliste

- 1: Ultraschallsensoren
- 1-1: erster Ultraschallsensor
- 1-2: zweiter Ultraschallsensor
- 1-3: dritter Ultraschallsensor
- 2: Beschleunigungssensoren
- 3: Temperaturfühler
- 4: Auswerte- und Steuereinrichtung
- 5: Anzeige- und Bedieneinrichtung; optische Ausgabeeinheit
- 6: akustische Signaleinrichtung, akustische Ausgabeeinheit
- 7: Datenbus (CAN)
- 8: Einpark-Hilfssystem
- 9, 9`: Sensorhalterung
- 10: Anschlusskabel
- 11: Montageöffnung
- 12: Untergrund
- 40: Speichereinheit
- 41: Zeit- oder Weggeber
- 42: Vergleichseinheit

- K: Kraftfahrzeug
- KS, KS': Körperschall (Übersprechsignal)
- M: Längsmittenebene
- O: Objekt
- S1-S10: Verfahrensschritte
- S1`: Verfahrensschritt
- S9: Verfahrensschritt
- UG: Gruppe von Ultraschallsensoren
- U11-U13: Ultraschall-Direktechos
- UK: Ultraschall-Kreuzechos
- US1-US3: Ultraschall-Sendesignale
- VB: Vibrationen
- v: Geschwindigkeit

## Patentansprüche

1. Verfahren zur Überprüfung einer wenigstens einen Ultraschallsensor (1; 1-1, 1-2, 1-3) aufweisenden Abstandsmessvorrichtung eines Kraftfahrzeugs (K), bei dem eine Funktionsbeeinträchtigung des Ultraschallsensors (1; 1-1, 1-2, 1-3) erkannt wird, wobei zunächst eine allgemeine Funktionsüberprüfung des Ultraschallsensors (1; 1-1, 1-2, 1-3) dahingehend erfolgt, ob dieser noch in der Lage ist, Ultraschall-Sendesignale zu versenden und Echosignale zu empfangen,
**dadurch gekennzeichnet, dass**
der Ultraschallsensor (1; 1-1, 1-2, 1-3) anschließend in einem weiteren Verfahrensschritt (S2) wie folgt überprüft wird:
• es wird gemessen, ob der Ultraschallsensor (1-2) dauerhaft einen Abstand in einem Nahbereich oder zeitlich stark schwankende Abstände im Nahbereich misst und bei Bejahung einer dieser Bedingungen wird auf eine Dejustage des Ultraschallsensors (1-2) geschlossen oder
• es wird gemessen, ob von wenigstens einem, dem zu prüfenden Ultraschallsensor (1-1) direkt benachbarten Ultraschallsensor (1-2) ein Körperschallsignal (KS) von dem zu prüfenden Ultraschallsensor (1-1) empfangen wird, wobei bei Verneinung dieser Bedingung auf eine Dejustage des zu prüfenden Ultraschallsensors (1-1) geschlossen wird oder
• es wird bei Annäherung an ein Objekt (O) überprüft, ob das Objekt (O) durch mehrere Ultraschallsensoren (1-1, 1-2, 1-3) einer Gruppe (UG) von Ultraschallsensoren (1-1, 1-2, 1-3) erfasst wird, wobei bei Bejahung dieser Bedingung überprüft wird, ob das Objekt (O) durch einen Ultraschallsensor (1-1, 1-2 oder 1-3) der Gruppe (UG) nicht erfasst wird, wobei bei Bejahung der letzteren Bedingung auf eine Dejustage desjenigen Ultraschallsensors (1-1, 1-2 oder 1-3) aus der Gruppe (UG) geschlossen wird, durch welchen das Objekt (O) nicht erfasst wurde oder
• es wird bei Ausschalten der Zündung durch den Ultraschallsensor (1; 1-1, 1-2, 1-3) ein Referenz-Echobild von dem das Kraftfahrzeug (K) umgebenden Untergrund angefertigt, wobei nach dem erneuten Einschalten der Zündung oder nach dem Öffnen des Fahrzeugs ein weiteres Echobild von dem das Kraftfahrzeug (K) umgebenden Untergrund angefertigt und das Echobild mit dem Referenz-Echobild verglichen wird, wobei bei einer Abweichung der Echobilder auf eine Dejustage des Ultraschallsensors (1; 1-1, 1-2, 1-3) geschlossen wird oder
• es wird nach einer Montage des Kraftfahrzeugs (K) im produzierenden Werk ein Echobild von dem das Kraftfahrzeug (K) umgebenden Hallen-Untergrund angefertigt, wobei das Echobild mit einem Initial-Echobild verglichen wird, welches gemäß der fahrzeugspezifischen Applikation des Ultraschallsensors (1; 1-1, 1-2, 1-3) bei einem ebenen Untergrund zu erwarten ist, wobei bei einer toleranzüberschreitenden Abweichung der Echobilder auf eine montagebedingte Dejustage des Ultraschallsensors (1; 1-1, 1-2, 1-3) geschlossen wird,
wobei nach Einschalten der Zündung oder nach dem Öffnen des Fahrzeugs in einem noch weiteren Verfahrensschritt (S3) zyklisch geprüft wird, ob eine Überprüfung des Ultraschallsensors (1; 1-1, 1-2, 1-3) mit Hilfe des besagten, weiteren Verfahrensschrittes (S2) ordnungsgemäß möglich war, das heißt, dass festgestellt werden konnte, ob eine Dejustage des Ultraschallsensors (1; 1-1, 1-2, 1-3) vorliegt oder nicht, wobei nach Überschreitung einer bestimmten Zeit oder einer bestimmten Wegstrecke nach Einschalten der Zündung oder nach dem Öffnen des Fahrzeugs, nach der eine solche ordnungsgemäße Überprüfung des Ultraschallsensors (1; 1-1, 1-2, 1-3) nicht möglich war, eine Auswertung von gespeicherten Werten von Beschleunigungssensoren (2) des Kraftfahrzeugs (K) dahingehend erfolgt, ob ein Crash oder eine Manipulation des Kraftfahrzeugs (K) stattgefunden hat, wobei bei Bejahung einer dieser Bedingungen auf eine crash- oder manipulationsbedingte Dejustage geschlossen wird.

2. Verfahren nach Anspruch 1, **dadurch gekennzeichnet, dass** bei erkannter Dejustage des wenigstens einen Ultraschallsensors (1; 1-1, 1-2, 1-3) ein optischer und/oder akustischer Hinweis an den Fahrer abgegeben wird und/oder vorher festgelegte Funktionen automatisch deaktiviert werden.

3. Verfahren nach einem der vorhergehenden Ansprüche, **dadurch gekennzeichnet, dass** vor Feststellung einer vorliegenden Dejustage des Ultraschallsensors (1-1) bei ausbleibendem Körperschallsignal (KS) die Außentemperatur gemessen und bei einer Außentemperatur um den Gefrierpunkt wenigstens ein sensorspezifischer Parameter des Ultraschallsensors (1-1) gemessen wird, wobei bei einer Abweichung des sensorspezifischen Parameters von einem Normwert auf eine schnee- oder eisbedingte Funktionsstörung des Ultraschallsensors (1-1) geschlossen wird.

4. Verfahren nach Anspruch 1, **dadurch gekennzeichnet, dass** nur dann auf eine Dejustage des das Objekt (O) nicht erfassenden Ultraschallsensors (1-1, 1-2 oder 1-3) geschlossen wird, wenn der Ultraschallsensor (1-1, 1-2 oder 1-3) zwischen zwei anderen Ultraschallsensoren (1-1, 1-3) aus der Gruppe (UG) verbaut ist und sich die Detektionsbereiche der Ultraschallsensoren (1-1, 1-2, 1-3) überschneiden.

5. Verfahren nach einem der vorhergehenden Ansprüche, **dadurch gekennzeichnet, dass** vor Feststellung einer vorliegenden Dejustage des Ultraschallsensors (1-1) wenigstens ein sensorspezifischer Parameter des Ultraschallsensors (1-1) gemessen wird, wobei bei einer Abweichung des sensorspezifischen Parameters von einem Normwert auf eine Funktionsstörung des Ultraschallsensors (1-1) durch Störschall geschlossen wird.

## Claims

1. Method for checking a distance measuring device of a motor vehicle (K), which device comprises at least one ultrasonic sensor (1; 1-1, 1-2, 1-3), said method involving detecting a functional impairment of the ultrasonic sensor (1; 1-1, 1-2, 1-3), wherein a general function check on the ultrasonic sensor (1; 1-1, 1-2, 1-3) is initially performed to ascertain whether the latter is still capable of sending ultrasonic transmission signals and receiving echo signals,
**characterized in that** the ultrasonic sensor (1; 1-1, 1-2, 1-3) is then checked in a further method step (S2) as follows:
• it is measured whether the ultrasonic sensor (1-2) continuously measures a distance in a near range, or measures distances in the near range which are highly variable over time, and affirmation of one of these conditions results in a misalignment of the ultrasonic sensor (1-2) being inferred, or
• it is measured whether a structure-borne sound signal (KS) from the ultrasonic sensor (1-1) to be checked is received by at least one ultrasonic sensor (1-2) which is directly adjacent to the ultrasonic sensor (1-1) to be checked, and negation of this condition results in a misalignment of the ultrasonic sensor (1-1) to be checked being inferred, or
• when an object (0) is approached, it is checked whether the object (0) is detected by multiple ultrasonic sensors (1-1, 1-2, 1-3) of a group (UG) of ultrasonic sensors (1-1, 1-2, 1-3), and affirmation of this condition results in it being checked whether the object (O) is not detected by an ultrasonic sensor (1-1, 1-2 or 1-3) of the group (UG), and affirmation of the latter condition results in a misalignment of that ultrasonic sensor (1-1, 1-2, or 1-3) from the group (UG) which did not detect the object (O) being inferred, or
• when the ignition is switched off, a reference echo image of the underlying surface surrounding the motor vehicle (K) is produced by the ultrasonic sensor (1; 1-1, 1-2, 1-3), wherein after the ignition is switched on again or after the vehicle is opened, a further echo image of the underlying surface surrounding the motor vehicle (K) is produced and the echo image is compared with the reference echo image, wherein a difference between the echo images results in a misalignment of the ultrasonic sensor (1; 1-1, 1-2, 1-3) being inferred, or
• after assembly of the motor vehicle (K) in the production plant, an echo image of the factory underlying surface surrounding the motor vehicle (K) is produced, wherein the echo image is compared with an initial echo image which is to be expected for a flat underlying surface, according to the vehicle-specific application of the ultrasonic sensor (1; 1-1, 1-2, 1-3), and a difference between the echo images which exceeds a tolerance results in an assembly-related misalignment of the ultrasonic sensor (1; 1-1, 1-2, 1-3) being inferred,
wherein, after the ignition is switched on or after the vehicle is opened, yet another method step (S3) involves cyclically checking whether a check on the ultrasonic sensor (1; 1-1, 1-2, 1-3) using said further method step (S2) was properly possible, that is to say that it was possible to determine whether or not there is a misalignment of the ultrasonic sensor (1; 1-1, 1-2, 1-3), wherein after a certain time or a certain distance is exceeded after the ignition is switched on or after the vehicle is opened, after which time or distance such a proper check on the ultrasonic sensor (1; 1-1, 1-2, 1-3) was not possible, an evaluation of stored values of acceleration sensors (2) of the motor vehicle (K) takes place as to whether a crash or a manipulation of the motor vehicle (K) has taken place, wherein affirmation of one of these conditions results in a crash- or manipulation-related misalignment being inferred.

2. Method according to Claim 1, **characterized in that** detected misalignment of the at least one ultrasonic sensor (1; 1-1, 1-2, 1-3) results in a visual and/or audible indication being issued to the driver, and/or previously determined functions being automatically deactivated.

3. Method according to either of the preceding claims, **characterized in that** before a misalignment of the ultrasonic sensor (1-1) is determined as being present in the absence of a structure-borne sound signal (KS), the outside temperature is measured and an outside temperature around the freezing point results in at least one sensor-specific parameter of the ultrasonic sensor (1-1) being measured, and a deviation of the sensor-specific parameter from a standard value results in a snow- or ice-related malfunction of the ultrasonic sensor (1-1) being inferred.

4. Method according to Claim 1, **characterized in that** a misalignment of the ultrasonic sensor (1-1, 1-2 or 1-3) which does not detect the object (O) is inferred only if the ultrasonic sensor (1-1, 1-2 or 1-3) is installed between two other ultrasonic sensors (1-1, 1-3) from the group (UG) and the detection ranges of the ultrasonic sensors (1-1, 1-2, 1-3) overlap.

5. Method according to one of the preceding claims, **characterized in that** before a misalignment of the ultrasonic sensor (1-1) is determined as being present, at least one sensor-specific parameter of the ultrasonic sensor (1-1) is measured, and a deviation of the sensor-specific parameter from a standard value results in a malfunction of the ultrasonic sensor (1-1) caused by noise being inferred,

## Revendications

1. Procédé de contrôle d'un dispositif de mesure de distance d'un véhicule automobile (K) possédant au moins un capteur à ultrasons (1 ; 1-1, 1-2, 1-3), avec lequel une déficience fonctionnelle du capteur à ultrasons (1 ; 1-1, 1-2, 1-3) est reconnue, un contrôle général du fonctionnement du capteur à ultrasons (1 ; 1-1, 1-2, 1-3) étant tout d'abord effectué afin de vérifier si celui-ci est encore en mesure d'émettre des signaux d'émission ultrasonores et de recevoir des signaux d'écho, **caractérisé en ce que**
le capteur à ultrasons (1 ; 1-1, 1-2, 1-3) est ensuite contrôlé comme suit dans une étape de procédé supplémentaire (S2) :
* une mesure est effectuée afin de déterminer si le capteur à ultrasons (1-2) mesure continuellement une distance dans une zone de proximité ou des distances fluctuant fortement dans le temps dans la zone de proximité et, dans l'affirmative de l'une de ces conditions, un désajustement du capteur à ultrasons (1-2) est déduit ou
* une mesure est effectuée afin de déterminer si un signal de bruit de structure (KS) du capteur à ultrasons (1-1) à contrôler est reçu par un capteur à ultrasons (1-2), voisin direct du capteur à ultrasons (1-1) à contrôler et, dans la négative de cette condition, un désajustement du capteur à ultrasons (1-1) à contrôler est déduit ou
* lors d'une approche vers un objet (O), un contrôle est effectué afin de vérifier si l'objet (O) est détecté par plusieurs capteurs à ultrasons (1-1, 1-2, 1-3) d'un groupe (UG) de capteurs à ultrasons (1-1, 1-2, 1-3), un contrôle étant effectué dans l'affirmative de cette condition afin de vérifier si l'objet (O) n'est pas détecté par un capteur à ultrasons (1-1, 1-2 ou 1-3) du groupe (UG), l'affirmative de cette dernière condition amenant à conclure à désajustement du capteur à ultrasons (1-1, 1-2 ou 1-3) du groupe (UG) par lequel l'objet (O) n'a pas été détecté ou
* lors de la coupure de l'allumage, une image d'écho de référence de l'arrière-plan entourant le véhicule automobile (K) est créée par le capteur à ultrasons (1 ; 1-1, 1-2, 1-3), une image d'écho supplémentaire de l'arrière-plan entourant le véhicule automobile (K) étant créée après une nouvelle mise en marche de l'allumage ou après l'ouverture du véhicule et l'image d'écho est comparée à l'image d'écho de référence, un désajustement du capteur à ultrasons (1 ; 1-1, 1-2, 1-3) étant conclu dans le cas d'un écart de l'image d'écho ou
* après un assemblage du véhicule automobile (K) dans l'usine de production, une image d'écho de l'arrière-plan du hall entourant le véhicule automobile (K) est créée, l'image d'écho étant comparée à une image d'écho initiale qui est à attendre dans le cas d'un arrière-plan régulier conformément à l'application spécifique au véhicule du capteur à ultrasons (1 ; 1-1, 1-2, 1-3), un désajustement du capteur à ultrasons (1; 1-1, 1-2, 1-3) lié à l'assemblage étant conclu dans le cas d'un écart hors tolérance de l'image d'écho,
après la mise en marche de l'allumage ou après l'ouverture du véhicule, un contrôle cyclique étant effectué dans encore une étape de procédé supplémentaire (S3) afin de vérifier si un contrôle du capteur à ultrasons (1 ; 1-1, 1-2, 1-3) à l'aide de ladite étape de procédé supplémentaire (S2) était possible dans les règles de l'art, c'est-à-dire qu'il a pu être possible de constater si un désajustement du capteur à ultrasons (1; 1-1, 1-2, 1-3) est présent ou non, une interprétation de valeurs mémorisées de capteurs d'accélération (2) du véhicule automobile (K) étant effectuée après le dépassement d'un temps déterminé ou d'un parcours déterminé après la mise en marche de l'allumage ou après l'ouverture du véhicule afin de déterminer si une collision ou une manipulation du véhicule automobile (K) a eu lieu, un désajustement lié à une collision ou une manipulation étant conclu dans l'affirmative de l'une de ces conditions.

2. Procédé selon la revendication 1, **caractérisé en ce que** dans le cas d'un désajustement reconnu de l'au moins un capteur à ultrasons (1; 1-1, 1-2, 1-3), une notification visuelle et/ou sonore est délivrée du conducteur et/ou des fonctions spécifiées précédemment sont automatiquement désactivées.

3. Procédé selon l'une des revendications précédentes, **caractérisé en ce qu'**avant de constater la présence d'un désajustement du capteur à ultrasons (1-1) en l'absence d'un signal de bruit de structure (KS), la température extérieure est mesurée et, dans le cas d'une température extérieure autour du point de congélation, au moins un paramètre spécifique au capteur du capteur à ultrasons (1-1) est mesuré, une perturbation du fonctionnement du capteur à ultrasons (1-1) lié à la neige ou au verglas étant conclue dans le cas d'un écart du paramètre spécifique au capteur par rapport à une valeur normalisée.

4. Procédé selon la revendication 1, **caractérisé en ce qu'**un désajustement du capteur à ultrasons (1-1, 1-2 ou 1-3) ne détectant pas l'objet (O) est conclu uniquement si le capteur à ultrasons (1-1, 1-2 ou 1-3) est monté entre deux autres capteurs à ultrasons (1-1, 1-3) du groupe (UG) et que les plages de détection des capteurs à ultrasons (1-1, 1-2, 1-3) se chevauchent.

5. Procédé selon l'une des revendications précédentes, **caractérisé en ce qu'**avant de constater la présence d'un désajustement du capteur à ultrasons (1-1), au moins un paramètre spécifique du capteur du capteur à ultrasons (1-1) est mesuré, une perturbation du fonctionnement du capteur à ultrasons (1-1) par un bruit perturbateur étant conclue dans le cas d'un écart du paramètre spécifique au capteur par rapport à une valeur normalisée.
